# EUROPÄISCHE PATENTSCHRIFT

(11) **EP 3 327 238 B1**
(45) Veröffentlichungstag und Bekanntmachung des Hinweises auf die Patenterteilung: **08.07.2020**
(21) Anmeldenummer: 18150815.1
(22) Anmeldetag: 26.04.2012
(51) Int. Cl.: E06B 3/02, E06B 3/16, E06B 3/54, B32B 17/06, E06B 5/16, E06B 3/70

(54) **BRANDSCHUTZ-DOPPELVERGLASUNG**
FIRE PROTECTION DOUBLE GLAZING
DOUBLE VITRAGE COUPE-FEU

(30) Priorität: 05.05.2011 DE 202011100310 U
(43) Veröffentlichungstag der Anmeldung: 30.05.2018
(62) Teilanmeldung aus: 12002965.7
(73) Patentinhaber: Etex Building Performance GmbH, 40878 Ratingen (DE)
(72) Erfinder: WIEDEMANN, Günter, 40629 Düsseldorf (DE)
(74) Vertreter: Vaeck, Elke

(56) Entgegenhaltungen:
- WO-A1-99/34082
- DE-U1-202008 016 781
- US-A- 4 893 443

## Beschreibung

Die Erfindung betrifft eine Verglasung für Brandschutz-Wandelemente, -Fenster, - Türen oder dergleichen mit zumindest zwei parallel beabstandeten Glasscheiben und einem zwischen diesen Glasscheiben angeordneten Abstandhalter, wobei der Abstandhalter eine Hülse und zumindest zwei mit der Hülse fest verbundene parallel beabstandete Anschlagflächen aufweist. Die Erfindung betrifft ferner ein Brandschutzelement, insbesondere in Form eines Wandelementes, eines Fensters, oder einer Türe, umfassend eine solche Verglasung, die mit einer Halterung fixiert ist.

Aus dem Stand der Technik sind Brandschutzscheiben mit verschiedenartigen Halterungen bekannt. Die DE 3508078(A1) beschreibt eine Halterung für Brandschutzscheiben, bei der die einzelnen Scheiben durch eine die Stoßkanten der Brandschutzscheibe umgreifende Rahmenkonstruktion gehalten werden. Bei diesem Aufbau wird es teilweise als nachteilig empfunden, dass kein rahmenloser Aufbau für eine Brandschutzverglasung realisiert werden kann. Insbesondere dann, wenn bewegliche Elemente wie Türen oder Fenster in die Verglasung integriert werden sollen, kann die Vielzahl an hierfür einzusetzenden Rahmenteilen das optische Erscheinungsbild beeinträchtigen auch den Lichtdurchtritt verringern.

Das deutsche Gebrauchsmuster DE 29819678(U1) stellt eine Brandschutzverglasung vor, bei der die vertikalen Stoßfugen der Brandschutzscheiben durch ein Dichtungsmittel verfüllt sind. Dieses Brandschutz-Wandelement weist ferner ein Fenster auf, das mittels einer Zarge und einem Rahmen in dem Brandschutz-Wandelement eingebaut ist. Auch bei dieser Lösung kann es als nachteilig empfunden werden, dass verschließbare Öffnungen nicht rahmenlos eingebaut werden können, was den Lichtdurchtritt durch die Verglasung reduziert.

In der europäischen Patentanmeldung EP 0 658 677 A1 wird eine rahmenlose Brandschutzverglasung beschrieben, bei der Brandschutzscheiben an einer freistehenden Stützkonstruktion befestigt werden. Die einzelnen Brandschutzscheiben werden bei dieser Lösung mittels Halterungen fixiert, bei denen auf den beiden Seiten der Brandschutzscheibe korrespondierende Stützplatten vorgesehen sind, die mittels einer durch die Brandschutzscheibe hindurch geführten Verschraubung miteinander verbunden werden und auf diese Weise die dazwischen befindliche Brandschutzscheibe im Klemmsitz halten.

Nachteilig bei dieser Lösung ist die Tatsache, dass aufgrund der durch die Scheibe hindurchgeführten Verschraubung und dem auf diese Weise realisierten Klemmsitz nur massive Brandschutzscheiben bzw. Verbund-Brandschutzscheiben mit zwischen den Glasscheiben liegenden festen intumeszierenden Schichten eingesetzt werden können. Die Verwendung von mehrlagigen gelgefüllten Brandschutzscheiben ist deshalb nicht möglich.

Eine gattungsgemäße Verglasung ist aus dem deutschen Gebrauchsmuster DE 20 2008 016 781 U1 bekannt. Darin ist eine Halterung für eine Brandschutzverglasung aus zwei parallel beabstandeten Glasscheiben mit einem Halteelement und einem Abstandhalter beschrieben. Der Abstandhalter besteht aus einer Hülse und zumindest zwei mit der Hülse fest verbundenen parallel beabstandeten Anschlagflächen, wobei die Hülse auf beiden Seiten der Anschlagflächen übersteht. Ferner sind eine Gegenplatte und ein Fixiermittel vorgesehen, mit dem das Halteelement durch die Hülse mit der Gegenplatte verbunden werden kann. Der Abstandhalter verhindert bei der Fixierung der Glasscheibe, dass diese durch die Verschraubung zusammengedrückt wird und möglicherweise Schaden nimmt. Die beidseitig die Anschlagflächen überragenden Abschnitte der Hülse sorgen dafür, dass auch wenn eine der Glasflächen im Brandfall zerstört wird, die weitere Scheibe noch gehalten wird.

Diese Lösung ist nicht in jeder Hinsicht befriedigend, da die Verklebung zwischen den Glasscheiben und den die Anschlagflächen überragenden Abschnitten der Hülse anfällig ist. WO 99/34082 A1 offenbart eine Verglasung für Brandschutz-Wandelemente, - Fenster, Türen oder dergleichen mit allen Merkmalen des Oberbegriffs des Anspruchs 1.

Die Aufgabe der vorliegenden Erfindung besteht darin, die Verklebung zu verbessern.

Die erfindungsgemäße Aufgabe wird gelöst durch eine Verglasung für Brandschutz-Wandelemente, -Fenster, -Türen oder dergleichen mit den Merkmalen des Anspruchs1.

Der vorliegenden Erfindung liegt die Erkenntnis zugrunde, dass bei Verwendung eines in dieser Weise ausgestalteten Abstandhalters der Übergangsbereich zwischen Abstandhalter und Glasscheiben besser abgedichtet werden kann. Insbesondere bei Verwendung einer Druckhülse in der Hülse des Abstandhalters für die Durchführung eines Fixiermittels, kann in den Bereich zwischen dieser Druckhülse und den Glasscheiben eine größere Menge an Klebstoff, insbesondere Silikonklebststoff oder -dichtmasse eingebracht werden. Die im Verhältnis zu der aus DE 20 2008 016 781 U1 breitere Klebefuge vermag mechanische Spannungen zwischen den angrenzenden Materialien besser auszugleichen, ohne dass es zu einem adhäsiven oder kohärenten Bruch innerhalb der Fuge kommt. Auf diese Weise kann der Luftzutritt zum Brandschutzgel verhindert werden.

Doch auch einer Doppelverglasung mit gasgefülltem Zwischenraum zwischen den Glasscheiben hat diese Lösung Vorteile, denn hierbei wird ein atmosphärischer Austausch des Füllgases mit der Außenluft wirksam unterbunden, was ansonsten zu einer Verschlechterung der Wärmedämmeigenschaften führen könnte. Mit anderen Worten ist der erfindungsgemäße Vorteil nicht auf gelgefüllte Brandschutzscheiben beschränkt.

Außerdem vermag die mit zwei bündigen Anschlagflächen ausgerüstete Hülse, die äußerlich an eine Garnrolle erinnert, für die Glasscheiben als Abstandshalter zu fungieren, mit dem die einzelnen Glasscheiben einer Brandschutz-Doppelverglasung zwischen dem Halteelement und der Gegenplatte im Klemmsitz eingespannt und auf diese Weise fixiert werden können, ohne dass starke mechanische Kräfte und Momente auf die einzelnen Glasscheiben der Doppelverglasung einwirken. Der Abstandhalter fixiert die parallelen Glasscheiben auf dem durch die Anschlagflächen vorgegebenen Abstand auch bei festem Anziehen der Verschraubung. An die erfindungsgemäße Verglasung können somit Halterungen für feststehende Glaselemente genauso angebracht werden, wie Tür- oder Fensterscharniere beziehungsweise entsprechende Beschläge.

Bei der erfindungsgemäßen Verglasungen handelt es sich vorzugsweise um mit Brandschutzgel gefüllte Brandschutzscheiben, auch wenn die erfindungsgemäße Konstruktion nicht auf diesen speziellen Brandschutzscheibentyp beschränkt ist. Mit Brandschutzgel bzw. Hydrogel gefüllte Brandschutzscheiben sind beispielsweise in der EP 1 820 931 A1 und in der DE 10 2005 018 842 A1 beschrieben. Diese Brandschutzscheiben haben gegenüber den ansonsten vielfach eingesetzten Brandschutzscheiben mit festen silikathaltigen intumeszierenden Zwischenschichten, beispielsweise auf Wasserglasbasis, den Vorteil, dass sie ein geringeres Flächengewicht bei vergleichbarer Feuerwiderstandsklasse erreichen können. Das bedeutet nicht nur einen einfacheren Transport der Scheiben, sondern auch, dass die Halterung und Rahmenkonstruktion wegen der geringeren Last leichter ausgelegt werden können.

Ferner sind die mit Brandschutzgel gefüllten Brandschutzscheiben gegenüber den Scheiben mit festen silikathaltigen Intumeszenz-Zwischenschichten weitaus weniger anfällig gegen eindringende Feuchtigkeit, welche bei den letztgenannten zur Trübung der Zwischenschicht führt, was den Austausch der Scheibe erfordert.

Mit einem Brandschutzgel gefüllte Brandschutzscheiben bestehen üblicherweise aus zwei parallel beabstandeten Glasscheiben aus Einscheibensicherheitsglas (ESG), die über ein in ihren Randbereichen zwischen den Glasscheiben liegendes umlaufendes Abstandshalteprofil und zum Beispiel einen Polyurethan-Randverbund fixiert und miteinander verbunden sind. Durch eine Öffnung in diesem Abstandshalteprofil werden das Brandschutzgel oder die Vorkomponenten eingefüllt, wobei im letzten Fall die Gelbildung durch Polymerisation zum Hydrogel im mit der Mischung ausgefüllten Hohlraum zwischen den Glasscheiben erfolgt. Die im Rahmen der Erfindung eingesetzten Brandschutzgele können auch Additive beinhalten wie Silikate, UV-Schutzmittel oder auch Farbstoffe.

Das in diesen Brandschutzscheiben eingefüllte Gel wird bei der Polymerisation jedoch nicht vollkommen fest, sondern behält je nach dem Vernetzungsgrad und der Menge an Monomeren in Bezug auf den Wassergehalt eine mehr oder minder feste gelartige Konsistenz. Dies macht mit einem solchen Gel gefüllte Brandschutzscheiben relativ empfindlich gegenüber einem auf die Glasflächen wirkenden Druck, da sich das Gel bei leichtem Verformen der Glasscheibe in der Schicht verschiebt.

Aus diesem Grund ist es problematisch, Halterungen direkt an diese Scheiben anzubringen, bei denen Druck auf die Glasscheiben ausgeübt wird. Zumeist werden solche Scheiben deshalb in einen Rahmen eingefasst, an dem dann die Halterungen angreifen können. Die erfindungsgemäße Konstruktion ermöglicht es jedoch, auch mit Brandschutzgel gefüllte Brandschutzscheiben rahmenlos zu verbauen, indem die Anschlagflächen des Abstandhalters den beim Einspannen der Doppelverglasung im Klemmsitz auftretenden Druck aufnehmen und so ein Verbiegen der Glasscheiben verhindern.

Ein besonderer Vorteil der erfindungsgemäßen Verglasung liegt darin, dass für den Fall, dass bei einem Brand die Glasscheibe auf der Brandseite durch die hohen Temperaturen platzt, die zweite Scheibe währenddessen durch das Brandschutzgel gekühlt wird und auch bei längerer Brandexposition intakt bleibt.

In Weiterbildung der erfindungsgemäßen Verglasung weisen die Hülse und/ oder die Anschlagflächen einen runden Querschnitt auf. Dies ist von Vorteil, da die in den Glasscheiben zur Anbringung von Scharnieren und dergleichen vorgesehenen Aussparungen in der Regel ebenfalls rund sind. Über einer solchen Aussparung kann der oben beschriebene Abstandhalter dann zuverlässig über eine Verklebung mit einem Füllmaterial oder einem Klebstoff befestigt werden.

Unabhängig von der Form der Hülse können eine oder beide Anschlagflächen des Abstandhalters einen runden Querschnitt aufweisen. Dies ist besonders vorteilhaft, da bei der Fixierung einer solchen Verglasung die zwischen den Anschlagflächen und den Glasscheiben durch den Klemmsitz hervorgerufenen Kräfte gleichmäßiger verteilt werden.

Nach einer weiteren Ausführungsform der erfindungsgemäßen Verglasung besteht der Abstandhalter aus Kunststoff und/ oder Metall, insbesondere aus mit Kunststoff beschichtetem Metall. Als Kunststoffe kommen beispielsweise glasfaserverstärkte Kunststoffe (GFK), Polyethylen (PE) oder Polypropylen (PP) in Betracht. Dabei sollten die Kunststoffe eine in Relation zur Scheibengröße und der gewünschten Materialstärke des Abstandshalters erforderliche Festigkeit besitzen. Kommen Brandschutzscheiben mit einem Brandschutzgel zum Einsatz, muss der Kunststoff gleichzeitig eine ausreichende chemische Beständigkeit gegenüber dem Brandschutzgel besitzen.

Abstandhalter aus Metall können zum Beispiel aus Eisen, Stahl, Edelstahl oder Aluminium gefertigt sein. Bevorzugt werden diese Metalle mit Kunststoff beschichtet, um Wechselwirkungen mit dem Brandschutzgel zu verhindern. Diese Wechselwirkungen können zum einen zur oberflächlichen Korrosion des Abstandhalters und gleichzeitig zu Verfärbungen des Brandschutzgels sowie Gasblasenbildung im Gel führen, was das optische Erscheinungsbild der Verglasung beeinträchtigen kann.

Als Kunststoffbeschichtung für die vorgenannten Metalle kommen prinzipiell sämtliche Kunststoffe in Betracht, die einerseits an dem Metall haften und andererseits eine ausreichende chemische Resistenz gegenüber dem eingesetzten Brandschutzgel aufweisen. Für diesen Zweck können die Abstandshalter aus Metall beispielsweise mit Polyethylen, Polypropylen oder PTFE beschichtet werden. Auch kann der erwünschte Schutz durch Pulverbeschichtung erzielt werden.

Die Kunststoffbeschichtung kann in diesem Fall gleichzeitig auch die Funktion eines Dämpfungselements erfüllen, da der direkte Kontakt zwischen Metall und Glasscheibe verhindert wird. Soll unbeschichtetes Metall eingesetzt werden, können zwischen den Anschlagflächen des Abstandhalters und den Glasscheiben ebenfalls Dämpfungselemente vorgesehen werden.

Es ist ebenso möglich, den Abstandshalter aus einem harten Kunststoff zu fertigen, der selbst gegenüber dem Brandschutzgel keine ausreichende chemische Stabilität besitzt und dann diesen Kunststoff-Abstandhalter in analoger Weise zu den Metall-Abstandhaltern mit einem der oben genannten Kunststoffe zu beschichten, um die chemische Resistenz des Bauteils sicher zu stellen.

Die erfindungsgemäß eingesetzten Abstandhalter können entweder spanabhebend aus einem Materialstück herausgearbeitet werden, zum Beispiel auf einer Drehbank oder mittels eines Gießverfahrens hergestellt werden. Es ist jedoch ebenso möglich, den Abstandhalter aus einer Hülse und den beiden Anschlagflächen durch zusammenfügen dieser Bauteile über Kleben, Schweißen oder ähnliche Fügetechniken herzustellen.

Bei denjenigen der vorgenannten Ausführungsformen, bei denen der Abstandhalter eine Kunststoffoberfläche aufweist, ist es weiterhin bevorzugt, dass diese zumindest im Bereich der Anschlagflächen haftungsverbessernd vorbehandelt ist. Diese Vorbehandlung kann auch auf der gesamten Oberfläche des Abstandhalters vorgenommen werden. Hierzu können Techniken wie beispielsweise mechanisches Anrauen, eine Corona-Vorbehandlung, Anätzen, Beschichten mit einem geeigneten Primer oder Haftvermittler oder andere für diesen Zweck bekannte Methoden zum Einsatz kommen.

In weiterer Ausgestaltung der erfindungsgemäßen Verglasung ist der Abstandhalter über einen Klebstoff und/ oder ein Füllmaterial mit den Glasscheiben verbunden. Hierfür können dem Fachmann an sich bekannte Kleb- beziehungsweise Füllstoffe eingesetzt werden, insbesondere spaltüberbrückende Klebstoffe, Gießharze, Silikonklebstoffe oder Silikonmassen. Die Gießharze können ein- oder zweikomponentig sein.

Für die erfindungsgemäße Verglasung können prinzipiell sämtliche Arten von Glasscheiben eingesetzt werden. Vorzugsweise besteht jedoch zumindest eine der Glasscheiben aus Sicherheitsglas, insbesondere aus Einscheibensicherheitsglas. Dies ist besonders vorteilhaft, da dieses bei extrem hohen Temperaturen im Brandfall in sehr viele kleine Bruchstücke zerspringt, von denen zum einen eine geringere Verletzungsgefahr ausgeht und die zum anderen auch im zerborstenen Zustand gut am Brandschutzgel haften und damit weiterhin das Brandschutzgel für eine gewisse Zeit vor dem direkten Flammenkontakt schützen. Da Einscheibensicherheitsglas nach dem Vorspannen nicht mehr geschnitten werden kann, müssen die Aussparungen für die Anbringung von Scharnieren, Schlössern und dergleichen bereits vor dem Vorspannen in den Glasscheiben vorgesehen werden. Erfindungsgemäß lassen sich jedoch ebenso andere Glasscheiben verwenden, wie Floatglas oder aber auch Verbundsicherheitsglas.

Die Glasscheiben können unabhängig voneinander eine Scheibendicke von 3 bis 20 mm aufweisen, bevorzugt 5 bis 10 mm. Der Abstand der Glasscheiben kann vorzugsweise im Bereich von 5 bis 50 mm liegen. Besonders bevorzugt beträgt der Abstand der Glasscheiben voneinander etwa 8 bis 25 mm, da sich auf diese Weise insbesondere bei mit Brandschutzgel gefüllten Brandschutzverglasungen gute Brandresistenzen bei gleichzeitig moderatem Gewicht der Verglasung erzielen lassen.

Nach einer besonders bevorzugten Ausführungsform der erfindungsgemäßen Verglasung ist in der Hülse des Abstandhalters eine Druckhülse vorzugsweise formschlüssig angeordnet, welche die Außenflächen der Glasscheiben überragt. Mit der formschlüssigen Anordnung der Druckhülse in der Hülse des Abstandhalters wird ein strammer Verbund vorteilhafterweise erzielt. Der Überstand der Druckhülse über die Außenflächen der Glasscheiben beträgt auf jeder Seite vorzugsweise zwischen 0,5 und 5 mm.

Für die Druckhülse kann prinzipiell jedes Material zum Einsatz kommen, beispielsweise kann die Druckhülse aus Kunststoff oder Metall, insbesondere aus mit Kunststoff beschichtetem Metall bestehen, also prinzipiell aus denselben Materialien wie der Abstandhalter. Da die Druckhülse jedoch nicht in direktem Kontakt mit dem Brandschutzgel steht, können darüber hinaus noch weitere Materialien verwendet werden, wie Messing oder andere Buntmetalllegierungen und dergleichen. Der Vorteil besteht darin, dass der erfindungsgemäße Abstandhalter einschließlich der Druckhülse mit einfachen Mitteln in verschiedenen Größen für unterschiedliche Scheibendicken hergestellt werden kann.

Die Herstellung einer erfindungsgemäßen Verglasung wird anhand einer mit einem Brandschutzgel gefüllten Brandschutzscheibe im Folgenden erläutert. Dabei werden zweckmäßigerweise zwei Brandschutz- Glasscheiben aus Einscheibensicherheitsglas mit zueinander korrespondierenden Aussparungen - beispielsweise in Kreisform - zur Anbringung eines Türscharniers bereitgestellt. Eine der Glasscheiben wird auf einen festen Untergrund gelegt und je ein Abstandhalter zentriert mit einer seiner Anschlagflächen über den Bereich der Aussparung geklebt, beispielsweise mit einem Silikonklebstoff oder einem silylvernetztenden Klebstoff. Dabei weisen die Anschlagflächen des Abstandhalters einen entsprechend größeren Durchmesser als die Aussparung der Glasscheibe auf. Zweckmäßigerweise ist der Innendurchmesser der Hülse kleiner gewählt als der Durchmesser der Aussparung.

Im nächsten Schritt wird an dieser Glasscheibe der für gelgefüllte Brandschutzscheiben übliche Randverbund umlaufend randseitig aufgeklebt. Dabei handelt es sich beispielsweise um ein Polyurethanprofil. Erfindungsgemäß sind die Höhe des Randverbundes und der gegenseitige Abstand der Anschlagflächen des Abstandhalters zweckmäßigerweise identisch. Im Folgenden Schritt wird die zweite Brandschutz-Glasscheibe mit korrespondierenden Aussparungen auf den Randverbund und den Abstandhalter aufgeklebt und der zwischen den beiden Brandschutz- Glasscheiben ausgebildete Zwischenraum mit einem Brandschutzgel vollständig ausgefüllt. Dazu kann in dem Randverbund eine Einfüllöffnung vorgesehen sein, die nach dem vollständigen Befüllen verschlossen wird.

Da die erfindungsgemäße Verglasung direkt mittels einer Halterung fixiert werden kann, lassen sich Brandschutzverglasungen bauen, bei denen die Scheiben nicht jeweils in einen umlaufenden Rahmen eingefasst werden müssen. Auf diese Weise erlauben die mit den erfindungsgemäßen Halterungen ausgerüsteten Brandschutzelemente einen höheren Lichtdurchtritt. Außerdem wirken derartige Brandschutzelemente optisch ansprechender. Wegen der strapazierfähigeren Verklebung zwischen Abstandhalter und Glasscheiben kann zudem ein Luftzutritt in das Brandschutzgel wirksam verhindert werden.

Ein weiterer Gegenstand der vorliegenden Erfindung ist gerichtet auf ein Brandschutzelement, insbesondere in Form eines Wandelementes, eines Fensters, oder einer Türe, umfassend eine erfindungsgemäße Verglasung die mit einer Halterung fixiert ist, wobei die Halterung zumindest ein Halteelement, eine Gegenplatte und ein Fixiermittel umfasst, mit dem das Halteelement durch die Hülse mit der Gegenplatte verbunden werden kann. Bei Ausführungsformen der Verglasung, bei der der Abstandhalter mit einer Druckhülse versehen ist, ist das Fixiermittel analog durch diese Druckhülse geführt.

In weiterer Ausgestaltung des erfindungsgemäßen Brandschutzelements ist das Halteelement und/ oder die Gegenplatte auf der der Glasscheibe zugewandten Seite mit einem Dämpfungselement versehen. Hierdurch kann der direkte Kontakt zwischen Metall und Glas vermieden werden. Ein solches Dämpfungselement kann beispielsweise eine Unterlegscheibe oder ein O-Ring sein. Dieser kann aus einem Kunststoff bestehen, insbesondere PTFE oder einem Polyamid, insbesondere Aramid, Silicon oder Gummi. In ganz besonders vorteilhafter Form ist die Unterlegscheibe aus einem hitzebeständigen Material. Dies ist besonders vorteilhaft, da auf diese Weise ein fester Klemmsitz für die Brandschutzscheibe verwirklicht werden kann ohne dass das Halteelement und die Gegenplatte, die üblicherweise aus Metall sind, direkten Kontakt zu den Glasscheiben besitzen.

Ist eine Druckhülse vorgesehen, ist es zweckmäßig, wenn die zuvor genannten Dämpfungselemente eine Dicke aufweisen, die zumindest dem Überstand der Druckhülse über die Oberflächen der Glasscheiben entspricht.

Bei dem erfindungsgemäßen Brandschutzelement sind das Halteelement und die Gegenplatte durch ein Fixiermittel miteinander verbunden. Dieses Fixiermittel kann beispielsweise ein Metallstift sein, der auf beiden Seiten angeschweißt wird oder aber in vorteilhafter Weise kann das Fixiermittel eine Schraube sein. Diese eröffnet die Möglichkeit, den Klemmsitz der erfindungsgemäßen Halterung über das an die Schraube angelegte Drehmoment beim Anziehen exakt festzulegen. Die Gegenplatte kann in diesem Fall eine Gewindevertiefung aufweisen oder aber auch ein durchgehendes Loch, in das ein Gewinde geschnitten ist. Ebenso kann die Gegenplatte durch eine Mutter gebildet werden, vorzugsweise in Kombination mit einer Unterlegscheibe.

Nach einer weiteren Ausführungsform des erfindungsgemäßen Brandschutzelements ist die Gegenplatte der Halterung ebenfalls als Halteelement ausgebildet. Diese Ausgestaltung ermöglicht es, die Halterung auf beiden Seiten der Brandschutzscheibe beispielsweise an einer Gebäudewand zu befestigen. Auf diese Weise können besonders hohe Brandschutzverglasungen mit einer verhältnismäßig geringen Anzahl an Halterungen sicher befestigt werden.

### Ausführungsbeispiel :

Die Funktionsweise der erfindungsgemäßen Halterung wird im Folgenden anhand der Figuren 1 bis 4 beschrieben. Dabei zeigen
- Fig. 1: eine erfindungsgemäße Verglasung in Form einer rahmenlosen Brandschutz-Glastür in der Draufsicht;
- Fig. 2: eine ausschnittsweise Vergrößerung einer Türschlossaussparung A der Tür gemäß Fig. 1;
- Fig. 3: den Bildausschnitt A gemäß Fig. 2 in Schnittdarstellung; sowie
- Fig. 4: eine vergrößerte Darstellung eines erfindungsgemäßen Abstandhalters mit einer Halterung.

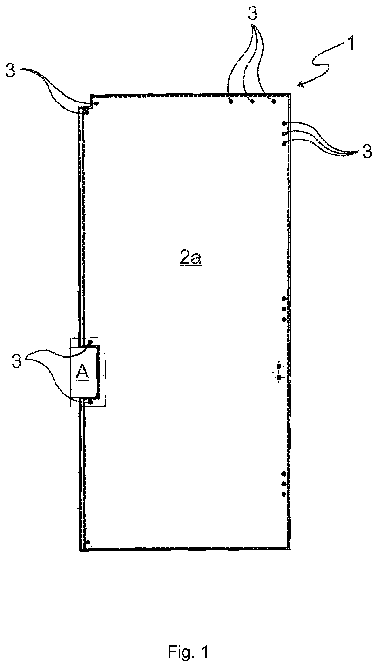

In Fig. 1 ist eine erfindungsgemäße Verglasung 1 in Form eines Türblatts einer rahmenlosen Brandschutztür dargestellt. Das Türblatt weist zwei parallel zueinander beabstandete Glasscheiben 2a, 2b aus Einscheibensicherheitsglas auf, wobei vorliegend nur die obere Glasscheibe 2a zu sehen ist, da diese die weitere Glasscheibe 2b verdeckt. In den Glasscheiben 2a, 2b sind mehrere kreisrunde Aussparungen 3 für die Montage des Türblatts 1 beziehungsweise zur Anbringung eines Türschlosses vorgesehen.

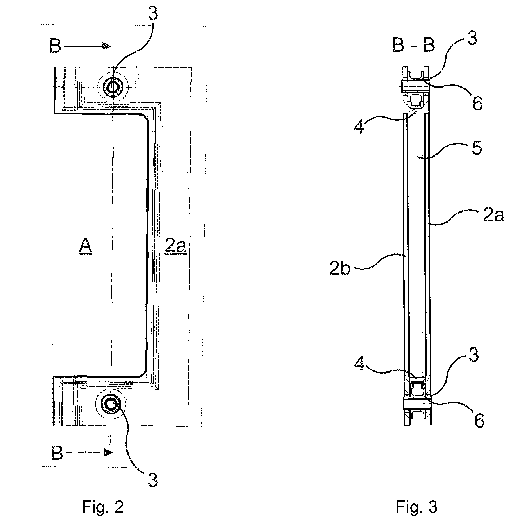

Die Fig. 2 und 3 zeigen einen vergrößerten Ausschnitt des Bereichs A des Türblatts in der Fig.1, also desjenigen Bereichs, in dem das Türschloss montiert wird. Dabei spiegelt die Darstellung der Fig. 2 die Draufsicht und Fig. 3 die Schnittansicht entlang der Linie B-B wieder. In der Fig. 3 ist zu erkennen, dass die Glasscheiben 2a, 2b mit einem Randverbund 4 aus Polyurethan verklebt sind, der vollständig umlaufend ausgebildet ist. Das zwischen den Glasscheiben 2a, 2b und dem Randverbund 4 eingeschlossene Volumen ist mit einem Brandschutzgel 5 vollständig gefüllt. Der Randverbund 4 fixiert die Glasscheiben 2a, 2b auf dem gewünschten Abstand zueinander und verhindert gleichzeitig ein Ausfließen des Brandschutzgels 5.

Das Brandschutzgel 5 wird beispielsweise als Hydrogel aus einer NaCl/ MgCl₂ Salzlösung unter Zugabe polymerisierbarer Verbindungen wie einer Mischung aus Acrylamid, N-Methylolacrylamid, Methylenbisarcylamid und einem Polymerisationsbeschleuniger in Wasser entweder vor dem Einfüllen zwischen die Glasscheiben 2a, 2b hergestellt oder in-situ zwischen den Glasscheiben 2a, 2b erzeugt, indem die oben genannten Komponenten miteinander vermischt und direkt in den Hohlraum zwischen die Glasscheiben 2a, 2b eingefüllt werden. Die Polymerisation zum Hydrogel erfolgt dann im nun mit der Mischung ausgefüllten Hohlraum zwischen den Glasscheiben 2a, 2b.

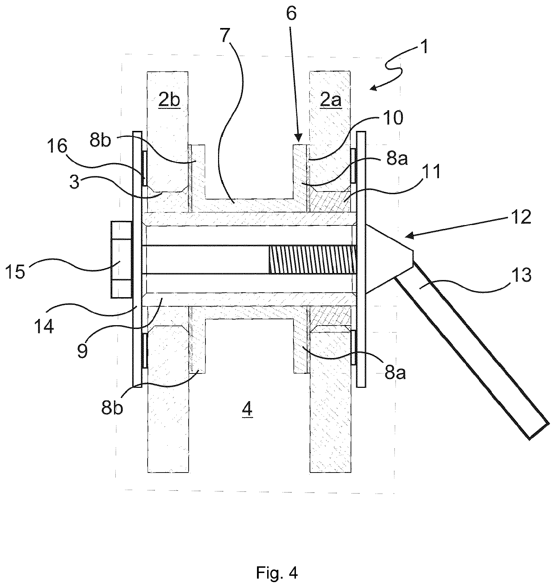

Im Bereich der Aussparung 3 ist erfindungsgemäß ein Abstandhalter 6 vorgesehen, der in der Fig. 4 vergrößert dargestellt ist. Der Abstandhalter 6 weist eine kreisrunde Hülse 7 aus PE-ummanteltem Stahl und zwei mit der Hülse 7 fest verbundene parallel beabstandete kreisrunde Anschlagflächen 8a, 8b auf, wobei die Hülse 7 auf beiden Seiten mit den Anschlagflächen 8a, 8b bündig abschließt, also keinen Überstand aufweist. Der zwischen den Anschlagflächen 8a, 8b definierte Abstand entspricht der Höhe des Randverbunds 4. Der Abstandhalter 6 besitzt demnach die äußere Form einer Garnrolle.

In der Hülse 7 ist ferner formschlüssig eine Druckhülse 9 (Kraftaufnahmehülse) aus Edelstahl zur Durchführung einer Schraube eingeschoben, die die Oberfläche der Glasscheiben 2a, 2b beidseitig überragt.

Zur Fixierung des Abstandshalters 6 sind die Anschlagflächen 8a, 8b vollflächig mit den Glasscheiben 2a, 2b durch eine Klebstoffschicht 10 aus einem Silikonklebstoff verklebt. Der Bereich zwischen der Aussparung 3 und der durch die Aussparung 3 hindurchreichenden Druckhülse 9 ist mit einer Silikondichtmasse 11 verfüllt. Damit dichtet der Abstandhalter 6 das Brandschutzgel 5 und die Umgebung zuverlässig gegeneinander ab.

Um die erfindungsgemäße Verglasung 1 als Teil eines rahmenlosen Brandschutzelements in einem Raum zu befestigen, ist daran eine Halterung 12 vorgesehen. Die Halterung 12 umfasst ein Halteelement 13, eine Gegenplatte 14 und ein Fixiermittel 15 in Form einer Schraube. Die Schraube 15 ist durch die in der Hülse 7 angeordnete Druckhülse 9 geführt und verbindet das Halteelement 13 mit der Gegenplatte 14. Zwischen dem Halteelement 13 beziehungsweise der Gegenplatte 14 und den jeweiligen Oberflächen der Glasscheiben 2a, 2b ist je ein ringförmiges Dämpfungselement 16 vorgesehen. Die Halterung 12 bildet somit im zusammengebauten Zustand für die erste Glasscheibe 2a zwischen Halteelement 13 und erster Anschlagfläche 8a und für die zweite Glasscheibe 2b zwischen Gegenplatte 14 und der zweiten Anschlagfläche 8b einen Klemmsitz aus, ohne dass die beiden Glasscheiben 2a, 2b gegeneinander gedrückt werden.

### Bezugszeichenliste

- 1): Verglasung
- 2a, b): Glasscheibe
- 3): Aussparung
- 4): Randverbund
- 5): Brandschutzgel
- 6): Abstandhalter
- 7): Hülse
- 8a, b): Anschlagfläche
- 9): Druckhülse
- 10): Klebstoffschicht
- 11): Silikondichtmasse
- 12): Halterung
- 13): Halteelement
- 14): Gegenplatte
- 15): Fixiermittel
- 16): Dämpfungselement

## Patentansprüche

1. Verglasung (1) für Brandschutz-Wandelemente, -Fenster, -Türen oder dergleichen mit zumindest zwei parallel beabstandeten Glasscheiben (2a, 2b) und einem zwischen diesen Glasscheiben (2a, 2b) angeordneten Abstandhalter (6), wobei der Abstandhalter (6) eine Hülse (7) und zumindest zwei mit der Hülse (7) fest verbundene parallel beabstandete Anschlagflächen (8a, 8b) aufweist, wobei eine erste Anschagfläche (8a) zur Auflage einer ersten Glasscheibe (2a) und ein zweite Anschagfläche (8b) zur Auflage einer zweiten Glasscheibe (2b) vorgesehen ist und durch die Anschlagflächen (8a, 8b) ein Abstand vorgegeben wird, wobei der Abstandhalter(6) die äußere Form einer Garnrolle besitzt **dadurch gekennzeichnet, dass** der Außendurchmesser der Hülse (7) kleiner ist als der Außendurchmesser der Anschlagflächen (8a, 8b), und dass die Hülse (7) auf beiden Seiten mit den Anschlagflächen (8a, 8b) bündig abschließt und nicht über die Anschlagflächen (8a, 8b) hinaussteht.

2. Verglasung nach Anspruch 1,
**dadurch gekennzeichnet, dass**
die Hülse (7) und/ oder die Anschlagflächen (8a, 8b) einen runden Querschnitt aufweisen.

3. Verglasung nach Anspruch 1 oder 2,
**dadurch gekennzeichnet, dass**
der Abstandhalter (6) über einen Klebstoff (10) und/ oder ein Füllmaterial (11) mit den Glasscheiben (2a, 2b) verbunden ist.

4. Verglasung nach einem der vorstehenden Ansprüche,
**dadurch gekennzeichnet, dass**
der Abstandhalter (6) aus Kunststoff, Metall, oder aus mit Kunststoff beschichtetem Metall besteht.

5. Verglasung nach Anspruch 4,
**dadurch gekennzeichnet, dass** der Abstandhalter (6) eine Kunststoffoberfläche aufweist und diese zumindest im Bereich der Anschlagflächen (8a, 8b) haftungsverbessernd vorbehandelt ist.

6. Verglasung nach einem der vorstehenden Ansprüche,
**dadurch gekennzeichnet, dass** der Raum zwischen den Glasscheiben (2a, 2b) mit einem Feststoff oder einem Gel, insbesondere einem Brandschutzgel (5), gefüllt ist.

7. Verglasung nach einem der vorstehenden Ansprüche,
**dadurch gekennzeichnet, dass** zumindest eine der Glasscheiben (2a, 2b) aus Sicherheitsglas, insbesondere aus Einscheibensicherheitsglas besteht.

8. Verglasung nach einem der vorstehenden Ansprüche,
**dadurch gekennzeichnet, dass** die Glasscheiben (2a, 2b) unabhängig voneinander eine Scheibendicke von 3 bis 20 mm aufweisen, vorzugsweise 5 bis 10 mm.

9. Verglasung nach einem der vorstehenden Ansprüche,
**dadurch gekennzeichnet, dass** die Glasscheiben (2a, 2b) einen Abstand von 5 bis 50 mm aufweisen.

10. Verglasung nach einem der vorstehenden Ansprüche,
**dadurch gekennzeichnet, dass** in der Hülse (7) eine Druckhülse (9) insbesondere formschlüssig angeordnet ist, welche die Außenflächen der Glasscheiben (2a, 2b) überragt.

11. Verglasung nach Anspruch 10,
**dadurch gekennzeichnet, dass**
die Druckhülse (9) die Außenflächen der Glasscheiben (2a, 2b) um 0,5 bis 5 mm überragt.

12. Verglasung nach Anspruch 10 oder 11,
**dadurch gekennzeichnet, dass**
die Druckhülse (9) aus Kunststoff, Metall, oder aus mit Kunststoff beschichtetem Metall besteht.

13. Brandschutzelement, insbesondere in Form eines Wandelementes, eines Fensters, oder einer Türe, umfassend eine Verglasung (1) nach einem der Ansprüche 1 bis 12 die mit einer Halterung (12) fixiert ist, wobei die Halterung (12) zumindest ein Halteelement (13), eine Gegenplatte (14) und ein Fixiermittel (15) umfasst, mit dem das Halteelement (13) durch die Hülse (7) mit der Gegenplatte (14) verbunden werden kann.

14. Brandschutzelement nach Anspruch 13,
**dadurch gekennzeichnet, dass**
das Halteelement (13) und/ oder die Gegenplatte (14) auf der der Glasscheibe (2a, 2b) zugewandten Seite ein Dämpfungselement (16) aufweist.

15. Brandschutzelement nach Anspruch 13 oder 14,
**dadurch gekennzeichnet, dass**
das Fixiermittel (15) eine Schraube ist.

16. Brandschutzelement nach einem der Ansprüche 13 bis 15,
**dadurch gekennzeichnet, dass** die Gegenplatte (14) ebenfalls als Halteelement (13) ausgebildet ist.

## Claims

1. Glazing (1) for fire-protection wall elements, windows, doors or the like having at least two glass panes (2a, 2b) spaced apart in parallel and a spacer (6) arranged between these glass panes (2a, 2b), wherein the spacer (6) has a sleeve (7) and at least two stop surfaces (8a, 8b) fixed permanently to the sleeve (7) and spaced apart in parallel, wherein a first stop surface (8a) is provided for supporting a first glass pane (2a) and a second stop surface (8b) is provided for supporting a second glass pane (2b) and the stop surfaces (8a, 8b) define a spacing, wherein the spacer (6) has the external form of a thread spool **characterized in that** the external diameter (7) of the sleeve is smaller than the external diameter of the stop surfaces (8a, 8b), and that the sleeve (7) terminates flush with the stop surfaces (8a, 8b) on both sides and does not protrude beyond the stop surfaces (8a, 8b).

2. Glazing according to Claim 1, **characterized in that** the sleeve (7) and/or the stop surfaces (8a, 8b) have a round cross-section.

3. Glazing according to Claim 1 or 2, **characterized in that** the spacer (6) is connected to the glass panes (2a, 2b) by an adhesive (10) and/or a filling material (11).

4. Glazing according to any one of the preceding claims, **characterized in that** the spacer (6) is made of plastic, metal or metal coated with plastic.

5. Glazing according to Claim 4, **characterized in that** the spacer (6) has a plastic surface which is pretreated at least in the region of the stop surfaces (8a, 8b) in order to improve adhesion.

6. Glazing according to any one of the preceding claims, **characterized in that** the space between the glass panes (2a, 2b) is filled with a solid material or a gel, in particular a fire-retardant gel (5).

7. Glazing according to any one of the preceding claims, **characterized in that** at least one of the glass panes (2a, 2b) consists of safety glass, in particular single-pane safety glass.

8. Glazing according to any one of the preceding claims, **characterized in that** the glass panes (2a, 2b) independently of each other have a pane thickness of 3 to 20 mm, preferably 5 to 10 mm.

9. Glazing according to any one of the preceding claims, **characterized in that** the glass panes (2a, 2b) have a spacing of 5 to 50 mm.

10. Glazing according to any one of the preceding claims, **characterized in that** a pressure sleeve (9) is arranged inside the sleeve (7), in particular in a form-fitting manner, which protrudes beyond the external surfaces of the glass panes (2a, 2b).

11. Glazing according to Claim 10, **characterized in that** the pressure sleeve (9) protrudes beyond the external surfaces of the glass panes (2a, 2b) by 0.5 to 5 mm.

12. Glazing according to Claim 10 or 11, **characterized in that** the pressure sleeve (9) is made of plastic, metal or metal coated with plastic.

13. Fire-protection element, in particular in the form of a wall element, a window, or a door, comprising a glazing (1) according to any one of Claims 1 to 12, which is fixed in place by a mounting (12), wherein the mounting (12) comprises at least one holding element (13), a counterplate (14), and a fastener (15) by means of which the holding element (13) can be connected to the counterplate (14) through the sleeve (7).

14. Fire-protection element according to Claim 13, **characterized in that** the holding element (13) and/or the counterplate (14) has a damping element (16) on the side facing the glass pane (2a, 2b).

15. Fire-protection element according to Claim 13 or 14, **characterized in that** the fastener (15) is a screw.

16. Fire-protection element according to any one of Claims 13 to 15, **characterized in that** the counterplate (14) is likewise configured as a holding element (13).

## Revendications

1. Vitrage (1) pour des éléments de paroi, des fenêtres et des portes coupe-feu ou similaires, comprenant au moins deux feuilles de verre (2a, 2b) écartées parallèlement et une entretoise (6) disposée entre ces feuilles de verre (2a, 2b), l'entretoise (6) présentant une douille (7) et au moins deux surfaces de butée (8a, 8b) écartées parallèlement, reliées de manière fixe à la douille (7), une première surface de butée (8a) étant prévue pour l'appui d'une première feuille de verre (2a) et une deuxième surface de butée (8b) étant prévue pour l'appui d'une deuxième feuille de verre (2b) et une distance étant définie par les surfaces de butée (8a, 8b), l'entretoise (6) ayant la forme extérieure d'une bobine de fil, **caractérisé en ce que** le diamètre extérieur de la douille (7) est inférieur au diamètre extérieur des surfaces de butée (8a, 8b) et **en ce que** la douille (7) se termine de manière affleurante aux deux surfaces de butée (8a, 8b) et ne dépasse pas des surfaces de butée (8a, 8b).

2. Vitrage selon la revendication 1, **caractérisé en ce que** la douille (7) et/ou les surfaces de butée (8a, 8b) présentent une coupe transversale ronde.

3. Vitrage selon la revendication 1 ou 2, **caractérisé en ce que** l'entretoise (6) est reliée aux feuilles de verre (2a, 2b) au moyen d'un adhésif (10) et/ou d'un matériau de remplissage (11).

4. Vitrage selon l'une quelconque des revendications précédentes, **caractérisé en ce que** l'entretoise (6) est composée de matière plastique, de métal ou de métal revêtu de matière plastique.

5. Vitrage selon la revendication 4, **caractérisé en ce que** l'entretoise (6) présente une surface en matière plastique et celle-ci est prétraitée pour améliorer l'adhérence au moins dans la zone des surfaces de butée (8a, 8b).

6. Vitrage selon l'une quelconque des revendications précédentes, **caractérisé en ce que** l'espace entre les feuilles de verre (2a, 2b) est rempli d'un solide ou d'un gel, en particulier d'un gel coupe-feu (5).

7. Vitrage selon l'une quelconque des revendications précédentes, **caractérisé en ce qu'**au moins une des feuilles de verre (2a, 2b) est composée de verre de sécurité, en particulier de verre de sécurité en feuille simple.

8. Vitrage selon l'une quelconque des revendications précédentes, **caractérisé en ce que** les feuilles de verre (2a, 2b) présentent, indépendamment l'une de l'autre, une épaisseur de feuille de 3 à 20 mm, de préférence de 5 à 10 mm.

9. Vitrage selon l'une quelconque des revendications précédentes, **caractérisé en ce que** les feuilles de verre (2a, 2b) présentent un écartement de 5 à 50 mm.

10. Vitrage selon l'une quelconque des revendications précédentes, **caractérisé en ce qu'**une douille de pression (9) est disposée dans la douille (7), en particulier par complémentarité de forme, et dépasse des surfaces extérieures des feuilles de verre (2a, 2b).

11. Vitrage selon la revendication 10, **caractérisé en ce que** la douille de pression (9) dépasse de 0,5 à 5 mm des feuilles de verre (2a, 2b).

12. Vitrage selon la revendication 10 ou 11, **caractérisé en ce que** la douille de pression (9) est composée de matière plastique, de métal ou de métal revêtu de matière plastique.

13. Élément coupe-feu, en particulier sous la forme d'un élément de paroi, d'une fenêtre ou d'une porte, comprenant un vitrage (1) selon l'une quelconque des revendications 1 à 12 qui est fixé au moyen d'un support (12), le support (12) comprenant au moins un élément de support (13), une contre-plaque (14) et un moyen de fixation (15), au moyen duquel l'élément de support (13) peut être relié à la contre-plaque (14) à travers la douille (7).

14. Élément coupe-feu selon la revendication 13, **caractérisé en ce que** l'élément de support (13) et/ou la contre-plaque (14) présente(nt) un élément d'amortissement (16) sur le côté orienté vers la feuille de verre (2a, 2b).

15. Élément coupe-feu selon la revendication 13 ou 14, **caractérisé en ce que** le moyen de fixation (15) est une vis.

16. Élément coupe-feu selon l'une quelconque des revendications 13 à 15, **caractérisé en ce que** la contre-plaque (14) est aussi réalisée sous la forme d'un élément de support (13).
